# EUROPEAN PATENT APPLICATION

(11) **EP 1 528 727 A1**
(43) Date of publication of application: **04.05.2005**
(21) Application number: 04021248.2
(22) Date of filing: 07.09.2004
(51) Int. Cl.: H04L 12/56

(54) **Method and information processing system with a communication device communicating with an outside device**

(30) Priority: 31.10.2003 JP 2003373627
(71) Applicant: Kabushiki Kaisha Toshiba, Tokyo 105-8001 (JP)
(72) Inventor: Aoyagi, Kazunori, Tokyo 105-8001 (JP)
(74) Representative: Henkel, Feiler & Hänzel

(57) **Abstract**

An information processing apparatus comprises a first communication unit (3) which receives locator information from a wireless phone (2) through a first communication channel, and an interface unit (9) which receives access request to access a server (12) corresponding to the locator information. The information processing apparatus (1) further includes a second communication unit (7) which accesses to the server (12) in accordance with the access request through a second communication channel that is different from the first communication channel, and receives information stored in the server (12).

## Description

This invention relates to an information processing apparatus with at least two communication units, which is capable of communicating with outside devices.

With remarkable progress in technology concerning cellular phones in recent years, mail transmission/reception or access to a World Wide Web (hereinafter "WWW") server over the Internet has been readily performed.

In addition, a technique for easily browsing data received by the cellular phone is introduced. For example, Japanese Patent Application Publication (KOKAI) No. 2003-87363 discloses an information processing device displaying data received by a cellular phone, and that the cellular phone accesses to a WWW server via a cellular phone network in a case where such connection is required.

The above reference, however, requires that a user operates the cellular phone when the user would like to display data to be received from a WWW server, namely the cellular phone is used as a remote controller for the information processing device.'Since the communication speed via the cellular phone network is relatively slow, the costs incurred due to access charges can become substantial.

According to one aspect of the present invention, there is provided a method comprising receiving mail data with locator information from a wireless phone over a wireless communication; displaying the mail data with locator information on a display device; and accessing a server device identified by the locator information via a network different from the wireless communication when an access request is done by using the locator information displayed on the display device.

According to another aspect of the present invention, there is provided an information processing apparatus, comprising: a first communication unit to receive locator information from a wireless phone through a first communication channel; an interface unit to receive an access request to access a server corresponding to the locator information; and a second communication unit to access the server in accordance with the access request through a second communication channel that is different from the first communication channel, and receive information stored in the server.

According to still another aspect of the present invention, there is provided an information processing system, comprising a wireless phone to transfer mail information with locator information via a first communication channel when the mail information with the locator information has been received; a display device; a user interface; and an information processing apparatus coupled to the display device and the user interface, including i) a first communication unit to receive the mail information with the locator information from the wireless phone via the first communication channel, ii) an output unit to route the mail information with the locator information to the display device, iii) an input unit coupled to the user interface, the input unit to receive an access request input by the user interface to access a server corresponding to the locator information, iv) a second communication unit to access the server corresponding to the locator information via a second communication channel differing from the first communication channel, and to receive information stored in the server, wherein the output unit outputs the information from the server to the display device.

This summary of the invention does not necessarily describe all necessary features so that the invention may also be a sub-combination of these described features.

The invention can be more fully understood from the following detailed description when taken in conjunction with the accompanying drawings, in which:
FIG. 1 is an exemplary diagram showing a configuration of an information processing system according to a embodiment of the present invention;
FIG. 2 is an exemplary diagram showing a configuration of a control of the information processing system of FIG. 1;
FIG. 3 is an exemplary diagram illustrating wireless communication processing between an information processing apparatus and a wireless telephone phone in the embodiment;
FIG. 4 is an exemplary flow chart for illustrating an operation at the side of the wireless telephone in the embodiment;
FIG. 5 is an exemplary flow chart for illustrating an operation at the side of the information processing apparatus in the embodiment (a first half part); and

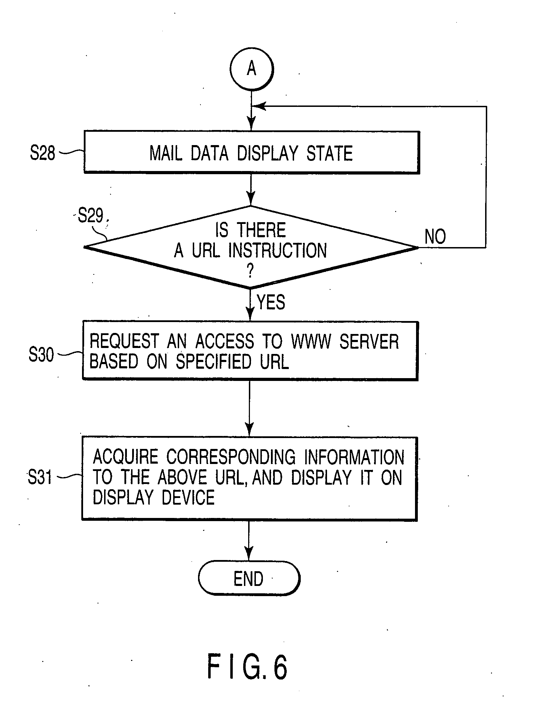

FIG. 6 is an exemplary flow chart for illustrating an operation at the side of the information processing apparatus in the embodiment (a last half part).

Various embodiments according to the present invention will be described hereinafter with reference to the accompanying drawings. In general, according to one embodiment of the invention, an information processing apparatus comprises a first communication unit which receives locator information from a wireless phone through a first communication channel, and an interface unit which receives an access request to access a server corresponding to the locator information. The information processing apparatus further includes a second communication unit which accesses the server in accordance with the access request through a second communication channel that is different from the first communication channel, and receives information stored in the server.

In the following description, certain terminology is used to describe various features of one or more embodiments of the invention. For example, a "unit" is generally defined as hardware, software or a combination thereof operating to perform certain functions. A "wireless phone" is a cellular telephone but may be a telephone that receives other types of wireless signals besides radio frequency 'RF" cellular telephone signals.

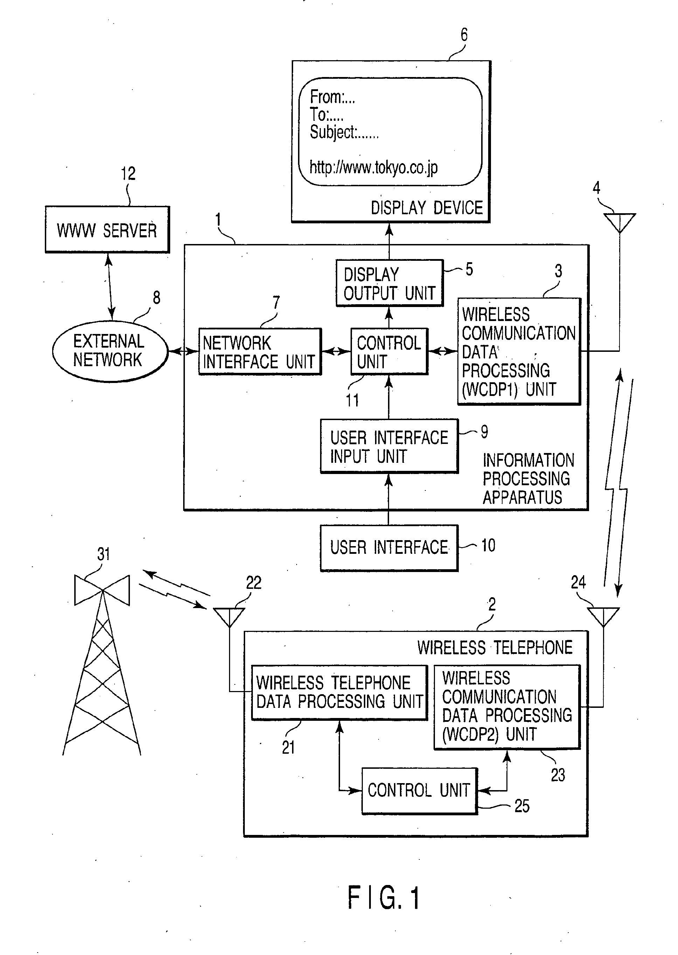

According to an embodiment, FIG. 1 shows an exemplary configuration of an information processing system 1. The information processing apparatus 1 comprises a wireless communication data processing unit (hereinafter "WCDP1 unit") 3 representative of a first communication unit, an antenna 4, a display output unit 5, a network interface unit 7, a user interface input unit 9, and a control unit 11. In addition, the information processing apparatus 1 is coupled to a display device 6 and a user interface device 10 which are disposed in room at home.

The WCDP1 unit 3 is equivalent to a wireless communication unit that conforms to a short distance wireless communication protocol (e.g., BLUETOOTH™) which supports wireless communication between the WCDP1 unit 3 and a wireless phone 2 via the antenna 4. The antenna 4 is coupled to the WCDP1 unit 3 to perform transmission/reception of wireless signals such as radio frequency "RF" signals. In this embodiment, a communication channel that the WCDP1 unit 3 communicates with the wireless phone 2 and/or that the WCDP1 unit 3 communicates with another device through the wireless phone 2 is representative of a first communication channel.

The display output unit 5 outputs information to be displayed onto the display device 6. The display device 6 is provided as a television monitor or a television receiver for displaying, for example, a picture image of a television program or the like, making it possible to display character information such as mail data or cursor.

The network interface unit 7, which is representative of a second communication unit, makes connection to an external network 8 such as a public or private network. When displayed on a public network such as the Internet, the network interface unit 7 enables access to an arbitrary World Wide Web (hereinafter "WWW") server 12. In this case, network connection is made through a communication line that is accessible a a low charge and at a high speed such as an Asymmetric Digital Subscriber Line (hereinafter "ADSL"). The communication line and/or the external network 8 in this embodiment are representative of a second communication channel that the network interface unit 7 uses for receiving information from a server.

The user interface input unit 9 accepts an operating signal sent from the user interface device 10. The user interface device 10 is equivalent to a remote controller to be used when a user makes input operation.

The control unit 11 governs an entire operation of the information processing apparatus 1, and controls the WCDP1 unit 3, the display output unit 5, the network interface unit 7, the user interface input unit 9 and the like, thereby executing wireless communication processing with the wireless phone 2, information display processing for the display device 6, access processing for the WWW server 12, and the like processing. A specific processing operation will be described later.

On the other hand, the wireless phone 2 includes, a wireless phone data processing unit (hereinafter "CPDP unit") 21, an antenna 22, a second wireless communication data processing unit (hereinafter "WCDP2 unit") 23, an antenna 24, and a control unit 25. Now, assume that the wireless phone 2 is placed in a room that is different from the above-described information processing apparatus 1, but that the wireless phone 2 is placed within:the easy reach of wireless communication with the information processing apparatus 1.

The CPDP unit 21 makes connection with a wireless phone network by making wireless communication with a base station 31 (e.g., cell tower, satellite, etc.) via the antenna 22, and performs telephone communication or mail transmission/reception. The antenna 22 is connected to the CPDP unit 21 to perform wireless signal transmission/reception.

The WCDP2 unit 23 is equivalent to a short distance wireless communication unit that is compliant with BLUETOOTH™, and, for example, wireless communication may be performed between the WCDP2 unit 23 and the information processing apparatus 1 via the antenna 24. The antenna 24 is coupled to the WCDP2 unit 23 to perform wireless transmission/reception.

The control unit 25 governs an entire operation of the wireless phone 2, and controls the CPDP unit 21, the WCDP2 unit 23 and the like, thereby executing connection processing with a wireless phone network or wireless communication processing with the information processing apparatus 1. For example, the control unit 25, in a case where mail data has been received from the wireless phone network by the CPDP unit 21, transfers that mail data to the information processing apparatus 1 via the WCDP2 unit 23.

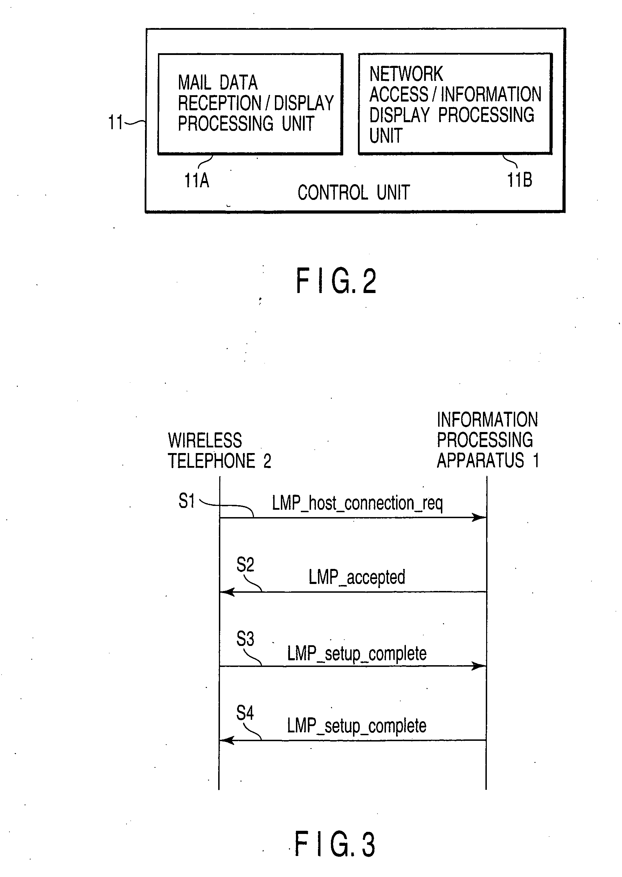

FIG. 2 shows a configuration of the control unit 11 shown in FIG. 1.

The control unit 11 includes a mail data reception/display processing unit 11A, which is a first control unit, and a network access/information display processing unit 11B, which is a second control unit.

The mail data reception or display processing unit 11A receives the mail data transferred from the wireless phone 2 through the WCDP1 unit 3, and causes the display device 6 to display the mail data.

Where a user has requested an access to information located at a particular Uniform Resource Locator (hereinafter "URL") presented in the above-described mail data displayed on the display device 6, the network access/information display processing unit 11B, accesses the WWW server 12 connected to the external network 8 based on the URL. This causes the display device 6 to display the information acquired from the WWW server 12.

Here, wireless communication connection processing between the information processing apparatus 1 and the wireless phone 2 will be described with referring to FIG. 3. According to this embodiment of the invention, the wireless communication connection between the information processing apparatus 1 and the wireless phone 2 is compliant with BLUETOOTH™. It is contemplated, however, that other wireless communication protocols besides BLUETOOTH™ may be used between the information providing apparatus 1 and the wireless phone 2.

Herein, referring to both figures 1 and 3, address (hereinafter "BD_ADDR") specific to the information processing apparatus 1, which is a connection destination, is set in advance at the wireless phone 2. When the wireless phone 2 has received a call from the base station 31 through the antenna 22 and the CPDP unit 21 and then has received an electronic mail message from the same, the wireless phone 2 starts wireless communication connection for the information processing apparatus 1 in accordance with a selected wireless communication protocol.

In operation S1, the wireless phone 2 issues a connection request. In detail, the wireless phone 2 transmits an LMP_host_connection_req signal to the information processing apparatus 1 via the WCDP2 unit 23 and the antenna 24. At this time, the WCDP2 unit 23 puts BD_ADDR information of the information processing apparatus 1 into the LMP_host_connection_req signal. The information processing apparatus 1 receives the LMP_host_connection_req signal from the wireless phone 2 via the antenna 4 and the WCDP1 unit 3.

When BD_ADDR of the information processing apparatus 1 is coincident with the BD_ADDR included in the LMP_host_connection_req signal, in operation S2, the information processing apparatus 1 returns a response, that is to transmit an LMP_accepted signal to the wireless phone 2 via the WCDP1 unit 3 and the antenna 4.

The wireless phone 2 receives the LMP_accepted signal from the information processing apparatus 1 via the antenna 24 and the WCDP2 unit 23, and detects that the information processing apparatus 1 has returned a response to the connection request.

In operations S3 and S4, each of the information processing apparatus 1 and the wireless phone 2 sequentially issues an LMP_setup_complete signal indicative completion of the connection. As a result, the wireless phone 2 and the information processing apparatus 1 establishes wireless communication connection under the protocol (BLUETOOTH™) therebetween.

Then, the wireless phone 2 sends the received mail data to the information processing apparatus 1 over the established wireless communication connection, which is the first communication channel.

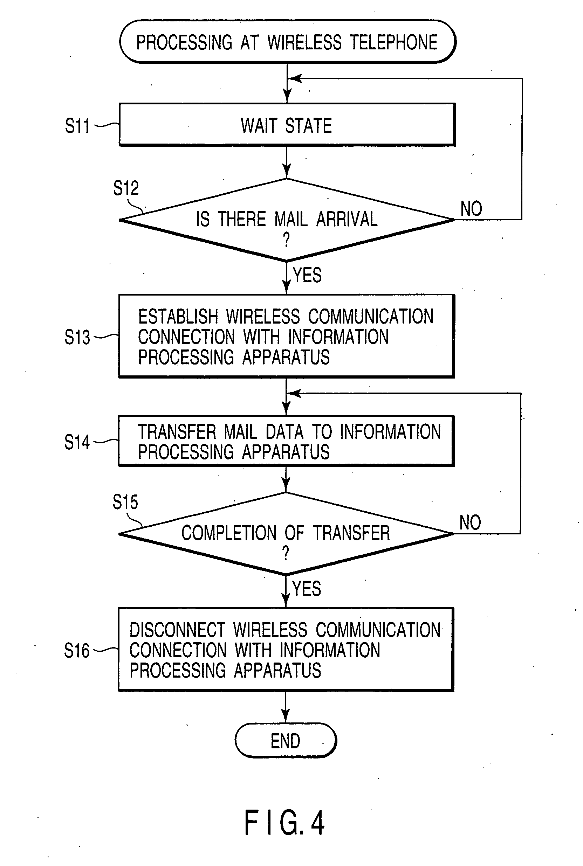

Now, an operation at the side of the wireless phone 2 will be described with referring to FIG. 4.

The wireless phone 2 is now in a reception wait state (operation S11). The control unit 25, in a case where mail data has been received through the CPDP unit 21 (Yes of operation S12), establishes wireless communication connection with the information processing apparatus 1 through the WCDP2 unit 23 (operation S13), and transfers the mail data to the information processing apparatus 1 (operation S14).

When transfer of the mail data completes (Yes of operation S15), the control unit 25 disconnects wireless communication connection with the information processing apparatus 1 (operation S16), and terminates processing.

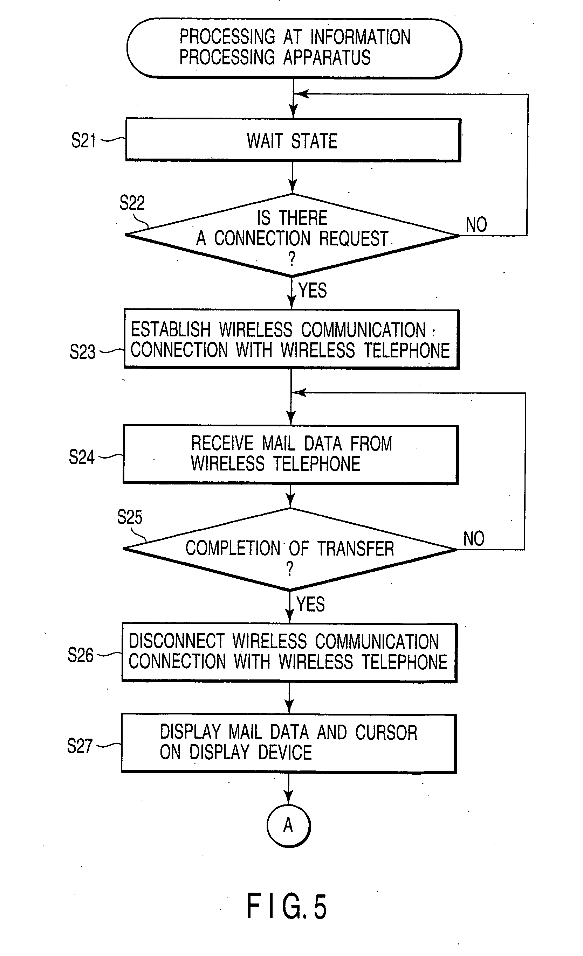

Now, an operation at the side of the information processing apparatus 1 will be described with referring to FIG. 5.

The information processing apparatus 1 is now in a reception wait state (operation S21). In a case where the information processing apparatus 1 has detected a wireless communication connection request for the WDCP1 unit 3 (Yes of operation S22), the control unit 11 establishes wireless communication connection with the wireless phone 2 through the WCDP1 unit 3 and is ready to receive the mail data (operation S23). After the establishment, the information processing apparatus 1 receives the mail data to be transferred from the wireless phone 2 through the antenna 4 and the WCDP1 unit 3 (step S24).

When transfer of the mail data completes (Yes of operation S25), the control unit 11 disconnects wireless communication connection with the wireless phone 2 (operation S26), and sends the received mail data to the display device 6 so as to cause the display device 6 to display the mail data and cursor through the display output unit 5 (operation S27).

In a state in which the display device 6 displays the mail data (operation S28), for example, the user verifies the mail data displayed on the display device 6 and the URL information displayed therein. Then, after the user moves the cursor to a position of the URL information while operating the user interface device 10, a connection instruction is initiated for the URL information using the user interface input unit 9. The user interface input unit 9 receives an operation signal indicating the connection instruction, and then the control unit 11 accepts the connection instruction (Yes of operation S29).

Next, the control unit 11 requests an access to the WWW server 12 corresponding to the URL displayed on the display device 6, through the network interface unit 7 (operation S30), and then acquires information such as home pages corresponding to the URL information through the network interface unit 7 and the second communication channel. The control unit 11 causes the display device 6 to display the acquired information through the display output unit 5 (operation S31).

Thus, according to this embodiment, in a case where the wireless phone 2 and display device 6 are placed in different places, for example, in one and another room, and the user is viewing the display device 6, even if the wireless phone 2 is not placed at hand, the display device 6 may display the mail data received by the wireless phone 2. In addition, information associated with mail data is acquired through a communication line at another high speed and at a low cost without intervening the wireless phone network, and the information may be displayed on the display device 6.

In the above-described embodiment, although the presence of the display device 6 has been shown outside of the information processing apparatus 1, both the display device 6 and the information processing apparatus 1 may be configured as one unit. That is, the information processing apparatus 1 may incorporate a display device 6 therein. In contrast, the information processing apparatus 1 may be incorporated in the display device 6.

In addition, a connection condition among the information processing apparatus 1, display device 6, user interface device 10, and network 8 may be wired or may be wireless.

## Claims

1. An information processing method, **characterized by** comprising:
receiving mail data with locator information from a wireless phone over a wireless communication (S21 to S26);
displaying the mail data with locator information on a display device (S27 to S28); and
accessing a server device identified by the locator information via a network different from the wireless communication when an access request is done by using the locator information displayed on the display device (S29 to S31).

2. An information processing method according to claim 1, **characterized in that** the wireless communication is compliant with BLUETOOTH™.

3. An information processing method according to claim 1, **characterized in that** the display device is a television monitor.

4. An information processing method according to claim 1, **characterized in that** the locator information includes a Uniform Resource Locator (URL).

5. An information processing apparatus (1), **characterized by** comprising:
a first communication unit (3) to receive locator information from a wireless phone through a first communication channel;
an interface unit (9) to receive an access request to access a server (12) corresponding to the locator information; and
a second communication unit (7) to access the server in accordance with the access request through a second communication channel that is different from the first communication channel, and receive information stored in the server (12).

6. An information processing apparatus according to claim 5, further comprising an output unit (5) which outputs the locator information to a display device (6) to inform a user.

7. An information processing apparatus according to claim 6, **characterized in that** the first communication channel is an ad hoc wireless communication channel.

8. An information processing apparatus according to claim 7, **characterized in that** the ad hoc wireless communication channel is compliant with BLUETOOTH™.

9. An information processing apparatus according to claim 6, **characterized in that** the output unit (5) outputs cursor information to be displayed on the display device (6).

10. An information processing system, **characterized by** comprising:
a wireless phone (2) to transfer mail information with locator information via a first communication channel when the mail information with the locator information has been received;
a display device (6);
a user interface (10); and
an information processing apparatus (1) coupled to the display device (6) and the user interface (10), including
i) a first communication unit (3) to receive the mail information with the locator information from the wireless phone (2) via the first communication channel,
ii) an output unit (5) to route the mail information with the locator information to the display device (6),
iii) an input unit (9) coupled to the user interface, the input unit (9) to receive an access request input by the user interface (10) to access a server (12) corresponding to the locator information,
iv) a second communication unit (7) to access the server corresponding to the locator information via a second communication channel differing from the first communication channel, and to receive information stored in the server (12),
wherein the output unit (5) outputs the information from the server (12) to the display device (6).

11. An information processing system according to claim 10, **characterized in that** the first communication channel is an ad hoc wireless communication channel.

12. An electronic apparatus according to claim 11, **characterized in that** the ad hoc wireless communication channel is compliant with BLUETOOTH™.

13. An information processing system according to claim 10, **characterized in that** the display device (6) is a television monitor.

14. An information processing system according to claim 10, **characterized in that** the output unit (5) outputs cursor information to be displayed on the display device (6) together with the locator information.
